# EUROPEAN PATENT SPECIFICATION

(11) **EP 0 659 127 B1**
(45) Date of publication and mention of the grant of the patent: **15.04.1998**
(21) Application number: 93919795.0
(22) Date of filing: 09.09.1993
(51) Int. Cl.: B60P 3/10, B62D 63/06, B63C 3/12

(54) **DEVICE AT A TRAILER**
VORRICHTUNG FÜR ANHÄNGER
DISPOSITIF POUR REMORQUE

(30) Priority: 11.09.1992 SE 9202615
(43) Date of publication of application: 28.06.1995
(73) Proprietor: LIFTUP AB, 392 37 Kalmar (SE)
(72) Inventor: ALTNÄS, Martin, S-593 30 Västervik (SE); FREDRIKSSON, Mattias, S-392 47 Kalmar (SE)
(74) Representative: Willquist, Bo
(86) International application number: PCT/SE93/00733
(87) International publication number: WO 94/06650

(56) References cited:
- WO-A-88/04618
- GB-A- 1 092 614
- US-A- 2 557 580
- US-A- 2 834 492

## Description

The present invention relates to a device at a trailer including a chassis supported by wheels, a coupling device in the front for connecting the trailer to a towing vehicle and also provided at the front end of the trailer, a winch tower with a winch to facilitate movement of an object along the trailer. In particular the invention relates to a lifting device at a boat trailer. Such a trailer is known e.g. from WO 88/04618.

When loading and unloading a trailer, it is in most cases necessary to move heavy objects vertically as well as horizontally to and from the trailer. If the object is heavy, access to a lifting device or assistance from other persons are usually required to perform the vertical movement. This leads to essential limitations with respect to the usefulness of trailer.

At launching and loading of pleasure-boats it is common practice to make use of a special boat trailer and a slanting ramp by means of which the trailer can be driven down into and out of the water. As a result of this procedure the most sensitive details on the boat trailer are lowered into water, which might cause corrosion damages. Furthermore, it is usually necessary to be at least two persons when launching and loading with a boat trailer and a ramp; one person to handle the towing vehicle and the boat trailer and one person in the boat.

The aim of the present invention is to provide a device at a trailer which eliminates said inconveniences and enables loading of a trailer by one person, especially launching and loading of a pleasure-boat from a quay, a pier or the like. In accordance with the invention this aim is obtained in that the device comprises a two-armed lever, whose arms form an angle with each other and comprise parallel arm, which are pivoted in an axis of rotation, which is oriented transversally at the back of the trailer, the first parallel arm elements, which mainly points forward from the axis of rotation, has lengths that exceeds or falls below the lengths of the second parallel arm elements of the lever, the ends of the parallel arm elements are connected to the ends of the axis of rotation and at their outer ends they are linked by transversal beams, the distance between the outer ends of the first parallel arm elements, exceeds or falls below the distance between the outer ends of the second parallel arm elements and limits the width of objects that can be loaded on to or unloaded from the trailer, the angle between the arms of the two-armed lever is determined by a rod, which is detachably mounted between the arms, the wire of the winch is arranged to run from the winch across the transversal beams at the outer ends of the parallel arm elements of the lever-arms and at one end is provided with lifting means for the object, the device also includes motion-preventing-means adapted to prevent relative motion between the parallel arm elements of the lever-arms and the wire during predetermined stages of the loading or unloading of the object.

To prevent said motion during the predetermined stages, said transversal beam of the second parallel arm elements of the lever is provided with a block through which the wire runs, which locks the wire in one direction and allows it to run in the other direction or in that the transversal beam of the second parallel arm elements of the lever is cylindrical and pivoted in the outer ends of the arms elements, in that the wire is guided at least one turn around the cylindrical beam and in that said motion-preventing-means comprises a cotter which is insertable into the cylindrical beam from the arm element to prevent the rotation of said beam.

In accordance with another characteristic feature of the invention the device includes a second winch,whereby loading and unloading respectively is facilitated especially when it is to be performed by one person, and whose wire is adapted to be connected to one end of the object and which is adapted to pull the object forward when it is to be placed on the chassiss, whereafter the wire of the first winch is loosened.

In accordance with another characteristic feature of the invention the second parallel arm elements(2b1, 2b2) of the lever for a transportation state can be turned down against the front end of the trailer when the arm elements are not used for lifting.

To facilitate the loading and unloading of the trailer the axis of rotation is placed behind the trailer platform and is vertically lowered so that the upper part of the axis lies on the same level as the platform.

According to the invention, full security from tilting of the trailer during loading or unloading and from damages on the towing device for the towing vehicle as well as on the corresponding coupling device on the trailer is assured in that the device comprises at least one support leg, which is mounted at the back of the chassiss and can be turned down or turned up. In a special embodiment this support leg is detachably mounted.

According to a final characteristic feature for the invention said device is placed on a boat trailer.

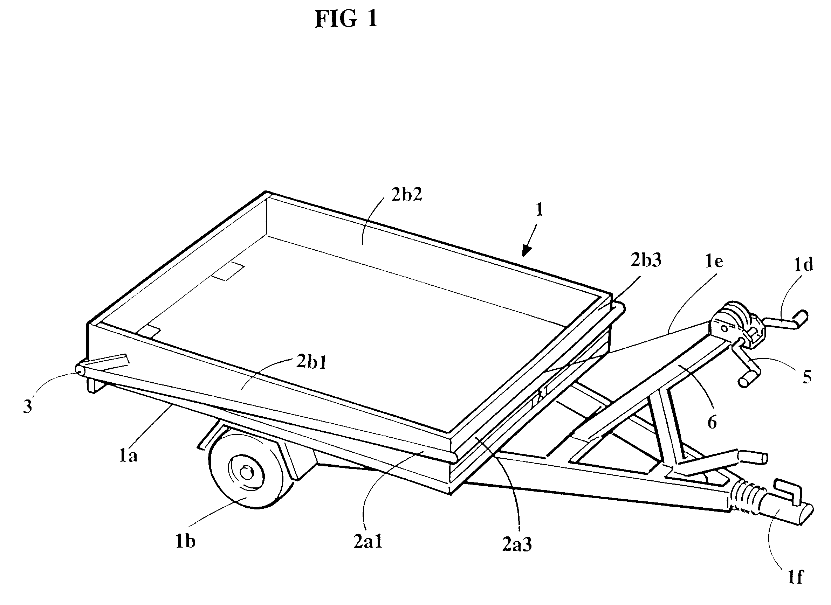

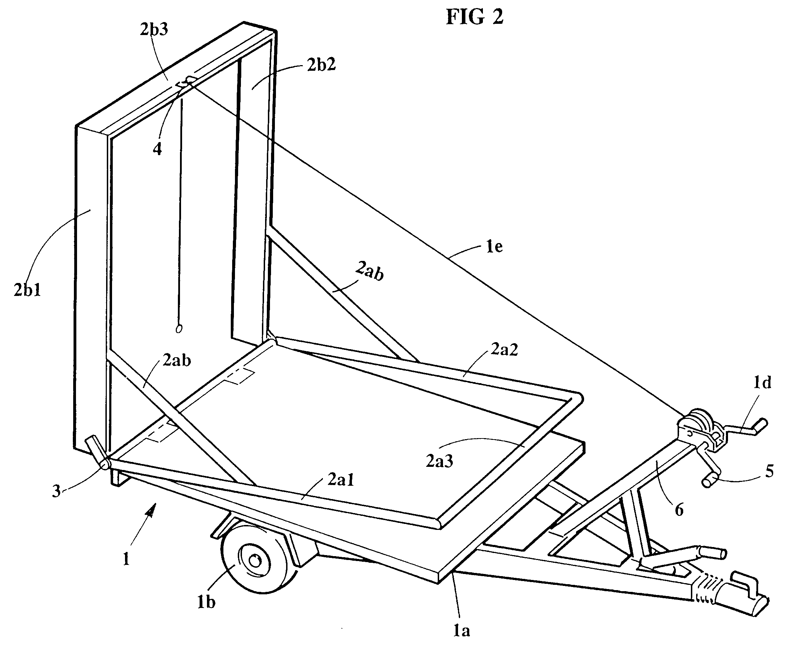

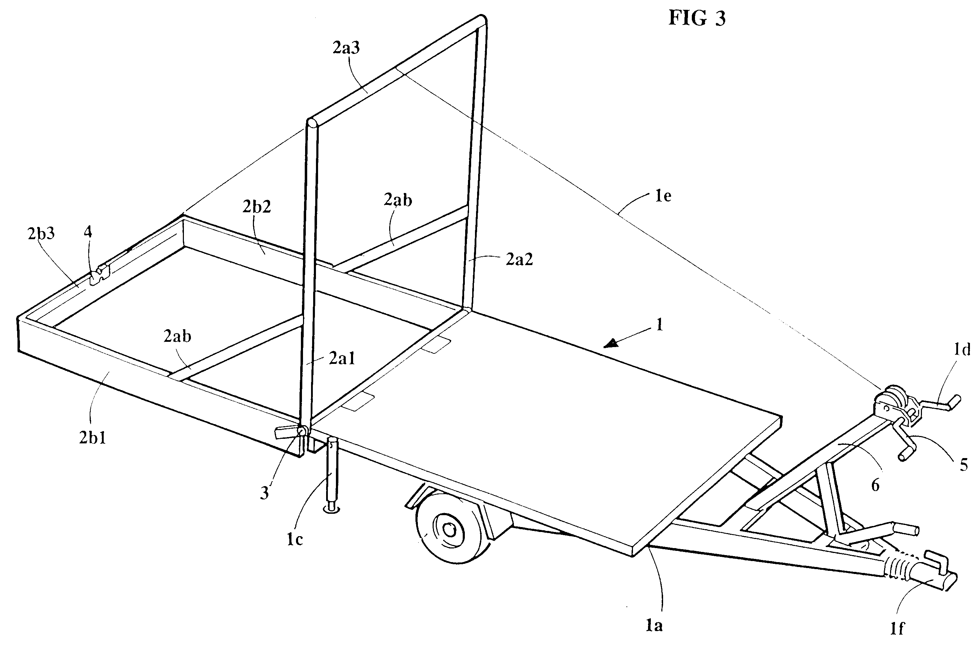

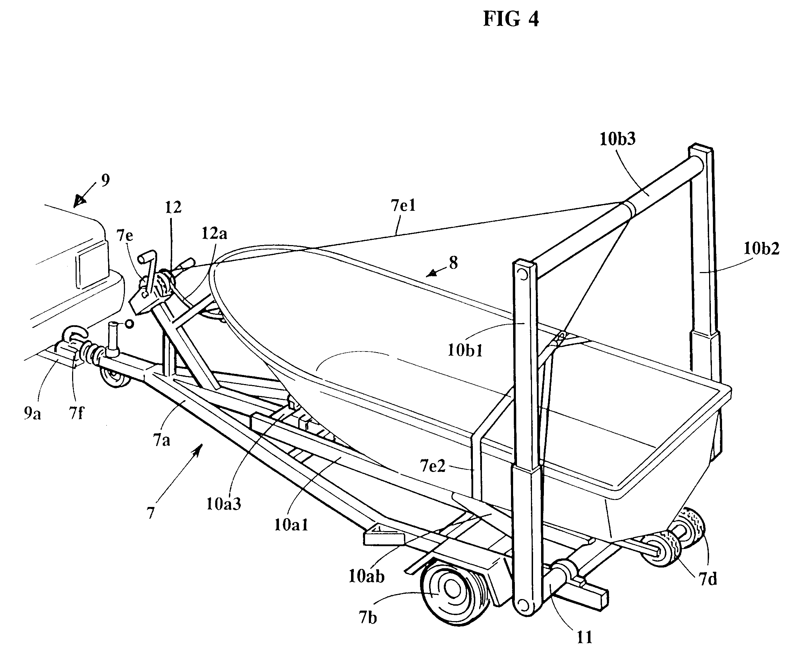

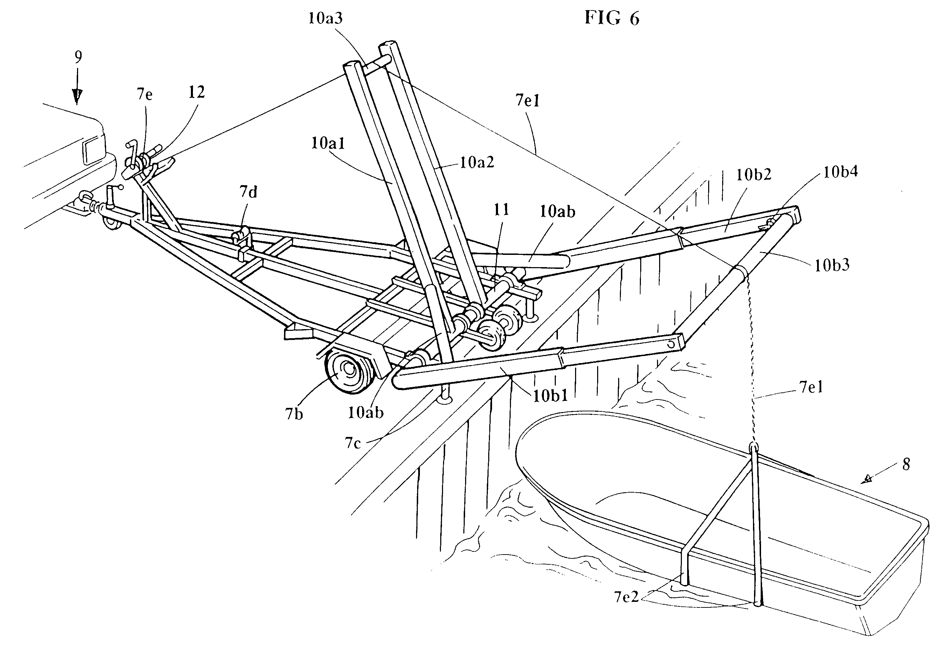

In the following the inventioned will be explained with reference to the drawing, in which Fig. 1 - Fig. 3 show the lever arm at different stages of loading or unloading with the device according to the invention mounted on a conventional trailer and Fig. 4 - Fig. 6 different stages of launching of a boat with the device according to the invention mounted on a boat trailer.

In the drawing 1 generally indicates a conventional trailer with a chassiss 1a, wheels 1b and a winch 1d whose wire 1e is coupled to an object and which is to be used for the transfer. The trailer is equipped with coupling means 1f of conventional type to couple the trailer to a motor vehicle with a towing device.

To facilitate the loading and unloading of objects, the trailer according to the invention is equipped with a device that comprises a two-armed lever 2, whose arms 2a, 2b can form an angle with each other. Said angle preferably exceeds the right angle, approximately 100°. The lever 2 is pivoted in an axis 3 which is mounted across the back of the chassis. The arm 2a essentially extends forward from the axis 3 toward said coupling means 1f and has a length that differs from the length of the other arm 2b. Both arms comprise two parallel arm elements 2a1, 2b1; 2a2, 2b2, which are connected to the ends of the rotation axis 3 and linked by transversal beams 2a3, 2b3 at their outer ends. The distance between the arm elements 2a1, 2b1 and 2a2, 2b2 limits the width of the objects for which the device can be used.

In the embodiment which is shown in the drawing, the angle between the arms is determined by a rod 2ab, which is detachably mounted between the arms 2a and 2b. The centre of gravity of the trailer can be displaced by a variation of this angle.

Said winch 1d is in many cases satisfactory for the handling of an object when loading and unloading a trailer and in particular when launching and loading a boat, but in the following it will be appearant that it is favourable to use an additional winch, as is shown in the drawing. The wire 1e of the winch 1d runs across the transversal beams 2a3, 2b3 at the outer ends of the lever arms 2a, 2b and has lifting eye bolts at the end.

In accordance with the invention, means to prevent relative motion between the lever arm 2b and the wire 1e during predetermined stages of launching or loading of a boat are provided for reasons which will be clear from the following.

In the embodiment according to Fig 1- Fig 3 a block 4 is provided on the upper horizontal beam where the wire 1e runs on the lever arm 2b, which block allows the wire to run in one direction and locks the wire in the other direction to prevent the lever from moving in relation to the wire when this is not desired. In the embodiment shown in Fig. 4- Fig. 6, the same function is achieved in that the transversal beam 10b3 between the arm elements 10b1 and 10b2 is cylindrical and rotatably mounted in these elements. The wire 7e1 is guided at least one turn around the transversal beam 10b3 and a cotter 10b4 is included that can be inserted from the arm element 10b2 into the cylindrical beam 10b3 to prevent rotation of the beam to prevent relative motion between the construction and the wire at this stage. The relative motion must be possible again at a later stage.

To increase the stability at loading or unloading of an object support legs 7c are provided at the back of the trailer, which support legs can be turned down or turned up or is detachably attached.

In the following the process of loading a boat on to the trailer will be explained in detail with reference to Fig. 4 - Fig. 6. The launching is accomplished in an analog manner, but in reversed order.

By means of the towing vehicle, the trailer 7 is parked as close to the end of the quay or the pier as possible. If the boat is a rowing-boat, which is not very heavy, it is unnecessary to turn down the support legs 7c; the towing vehicle 9 then functions as the necessary counterweight.

When handling boats with motors the support legs should always be turned down so that the strain is not excessive on the towing device and the coupling device. When the arm elements are lowered, i.e. moving freely around the axis 11, the telescopically extendable arm elements 10b1, 10b2 are pulled out to such a length the boat 8 goes free from the side of the quay or the pier when the lifting eye bolts 7e2 are applied at the centre of gravity. In the embodiment shown in the drawing, the arm elements are manually pulled out and the telecopical arm elements can be locked in relationship to each other by means of a cotter. The arm is then raised and the rods 10ab are mounted. It is evident that other known solutions are possible, e.g. motorcontrol, when it is not required for the arm 10b to be turned down.

When the crank of the winch is turned and the wire 7e1 is winched back onto the winch, the boat 8 is lifted out of the water. The wire 7e1 runs across the transversal beams 10a3, 10b3 and through a mechanical balancing, for which the angle between the lever arms 10a, 10b is important, the lever arm 10b is lifted while the lever arm 10a is lowered. Said angle is important since it eliminates the need to give the lifting device an initial push to make it pass the position of balance and thereby make the boat pass over the edge of the quay.

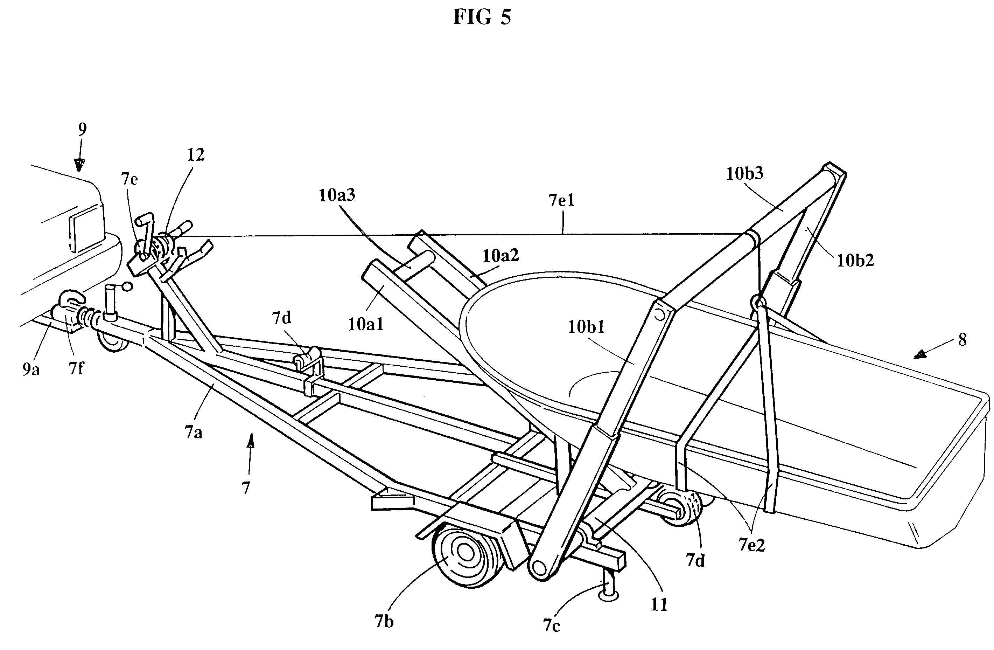

When the two lever arms 10a, 10b have about the same angle to the horizontal plane (Fig. 5), it is suitable to prevent rotation of the transversal beam 10b3 by means of the cotter 10b4 to lock the wire 7e1 in relation to the beam. The mechanical balancing, which resulted in the lifting of the boat 8, then ceases. It is now also suitable to couple the wire 12a of the winch 12 to the stem of the boat 8 to be able to control its movements when it is lifted in over the boat trailer by the winching of the wire 7e1. This is obtained in that the angle to the horizontal plane for the arm elements 10b1, 10b2 is increased gradually while the corresponding angle for the lever arm 10a is decreased until the arm rests on the chassis 7a. The boat 8 is now drawn forward by means of the winch 12, while the tension in wire 7e1 is released so that the boat finally rests on the means 7d that consist of rollers. Finally the rods 10ab are released so that the arm 7b can be turned down and telescoped into the normal position. The loading is now finished and transportation can take place after the boat 8 has been tied up and the support legs 7c have been turned up.

## Claims

1. Device at a trailer (1, 7) including a chassiss (1a, 7a) supported by wheels (1b, 7b), a coupling device (1f, 7f) in the front for connecting the trailer (1, 7) to a towing vehicle and also provided at the front end of the trailer, a winch tower (6) with a winch (1d, 7e), **characterized** in that the device comprises a two-armed lever, whose arms form an angle with each other and comprise parallel arm elements (2a1, 2b1; 2a2, 2b2: 10a1, 10b1; 10a2, 10b2), which are pivoted in an axis of rotation (3, 11), which is oriented transversally at the back of the trailer, the first parallel arm elements (2a1, 2a2: 10a1, 10a2), which mainly points forward from the axis of rotation (3, 11), has lengths that exceeds or falls below the lengths of the second parallel arm elements(2b1, 2b2: 10b1, 10b2) of the lever, the ends of the parallel arm elements (2a1, 2b1; 2a2, 2b2) are connected to the ends of the axis of rotation (3, 11) and at their outer ends they are linked by transversal beams (2a3, 2b3: 10a3, 10b3), the distance between the outer ends of the first parallel arm elements (2a1, 2a2: 10a1, 10a2), exceeds or falls below the distance between the outer ends of the second parallel arm elements(2b1, 2b2: 10b1, 10b2) and limits the width of objects that can be loaded on to or unloaded from the trailer, the angle between the arms of the two-armed lever is determined by a rod (2ab, 10ab), which is detachably mounted between the arms, the wire (1e, 7e1) of the winch is arranged to run from the winch across the transversal beams (2a3, 2b3: 10a3, 10b3) at the outer ends of the parallel arm elements (2a1, 2b1; 2a2, 2b2: 10a1, 10b1; 10a2, 10b2) of the lever-arms and at one end is provided with lifting means for the object, the device also includes motion-preventing-means adapted to prevent relative motion between the parallel arm elements (2a1, 2b1; 2a2, 2b2: 10a1, 10b1; 10a2, 10b2) of the lever-arms and the wire (1e, 7e1) during predetermined stages of the loading or unloading of the object.

2. Device in accordance with claim 1, **characterized** in that the transversal beam (2b3) of the second parallel arm elements (2b1, 2b2) of the lever is provided with a block (4) through which the wire (1e) runs, which locks the wire in one direction and allows it to run in the other direction or in that the transversal beam (10b3) of the second parallel arm elements (10b1, 10b2) of the lever is cylindrical and pivoted in the outer ends of the arms elements (10b1, 10b2), in that the wire (7e1) is guided at least one turn around the cylindrical beam (10b3) and in that said motion-preventing-means comprises a cotter (10b4) which is insertable into the cylindrical beam (10b3) from the arm element to prevent the rotation of said beam.

3. Device in accordance with any of the preceding claims**, characterized** in that it comprises a second winch (5, 12), whose wire is adapted to be connected to one end of the object and which is adapted to pull the object forward when it is to be placed on the chassiss (1a, 7a), whereafter the wire (1e, 7e1) of the first winch (1d, 7e) is loosened.

4. Device in accordance with any of the preceding claims, **characterized** in that the second parallel arm elements(2b1, 2b2) of the lever for a transportation state can be turned down against the front end of the trailer.

5. Device in accordance with any of the preceding claims, **characterized** in that the length of the parallel arm elements (2a1, 2b1; 2a2, 2b2: 10a1, 10b1; 10a2, 10b2) of the lever-arms exceeds the length of the trailer and that the distance between the parallel arm elements (2a1, 2b1; 2a2, 2b2: 10a1, 10b1; 10a2, 10b2) of the two lever-arms exceeds the width of the trailer so that the lever-arms do not occupy any loading space in the transportation state.

6. Device in accordance with any of the preceding claims, **characterized** in that the axis of rotation (3, 11) is placed behind the trailer platform and vertically lowered so that the upper part of the axis lies on the same level as the platform.

7. Device in accordance with any of the preceding claims, **characterized** in that the device comprises at least one support leg (1c, 7c), which can be turned down or turned up or is detachably attached.

8. Device in accordance with any of the preceding claims, **characterized** in that the device is placed on a boat trailer (7).

9. Device in accordance with any of the preceding claims, **characterized** in that the second parallel arm elements (10b1, 10b2) are telescopically extendable.

## Patentansprüche

1. Vorrichtung an einem Anhänger (1, 7), welche ein Fahrgestell umfaßt (1a, 7a), unterstützt von Rädern (1b, 7b), einer Kupplungsvorrichtung (1f, 7f) an der Vorderseite zum Verbinden des Anhängers (1, 7) mit einem Zugfahrzeug und auch am vorderen Ende des Anhängers bereitgestellt, ein Gewindeturm (6) mit einer Winde (1d, 7e), gekennzeichnet dadurch, daß die Vorrichtung einen zweiarmigen Hebel umfaßt, dessen Arme einen Winkel zueinander bilden und parallele Armelemente (2a1, 2b1; 2a2, 2b2: 10a1, 10b1; 10a2, 10b2) umfassen, welche schwenkbar an einer Rotationsachse (3, 11) gelagert sind, welche quer an der Rückseite des Anhängers ausgerichtet ist, das erste parallele Armelement (2a1, 2a2: 10a1, 10a2), welches hauptsächlich aus der Rotationsachse (3, 11) hervorsteht, hat Längen, welche innerhalb oder unter die Längen des zweiten parallelen Armelements (2b1, 2b2: 10b1, 10b2) des Hebels fallen, die Enden des parallelen Armelements (2a1, 2b1; 2a2, 2b2) sind mit den Enden der Rotationsachse (3, 11) verbunden und an ihren äußeren Enden durch Querstreben (2a3, 2b3: 10a3, 10b3) verbunden, die Entfernung zwischen den äußeren Enden der ersten parallelen Armelemente (2a1, 2a2: 10a1, 10a2) liegt innerhalb oder fällt unter die Entfernung zwischen den äußeren Enden der zweiten parallelen Armelemente (2b1, 2b2: 10b1, 10b2) und begrenzt die Breite der Gegenstände, die auf den Anhänger oder von diesem heruntergeladen werden können, der Winkel zwischen den Armen des zweiarmigen Hebels wird durch einen Stab bestimmt (2ab, 10ab), welcher abnehmbar zwischen die Arme montiert ist, das Seil (1e, 7e1) der Winde ist so angeordnet, daß er von der Winde über die Querstreben (2a3, 2b3: 10a3, 10b3) an den äußeren Enden der parallelen Armelemente (2a1, 2b1; 2a2, 2b2: 10a1, 10b1; 10a2, 10b2) der Hebelarme läuft und an einem Ende versehen ist mit Hebemitteln für den Gegenstand, die Vorrichtung umfaßt auch Bewegungsverhinderungsmittel, welche angebracht sind, um eine Relativbewegung zwischen den parallelen Armelementen (2a1, 2b1; 2a2, 2b2: 10a1, 10b1; 10a2, 10b2) der Hebelarme und dem Seil (1e, 7e1) während vorherbestimmten Phasen des Ladens oder Entladens des Gegenstandes zu verhindern.

2. Vorrichtung gemäß Anspruch 1, gekennzeichnet dadurch, daß die Querstrebe (2b3) der zweiten parallelen Armelemente (2b1, 2b2) des Hebels mit einem Klotz (4) versehen ist, durch welchen das Seil (1e) läuft, welcher das Seil in einer Richtung verriegelt und es ermöglicht, daß dieser in die andere Richtung läuft oder dadurch, daß die Querstrebe (10b3) der zweiten parallelen Armelemente (10b1, 10b2) des Hebels zylindrisch ist und schwenkbar in den äußeren Enden der Armelemente (10b1, 10b2) gelagert ist, dadurch, daß das Seil (7e1) wenigstens eine Drehung um die zylindrische Strebe (10b3) geführt ist und dadurch, daß das genannte Bewegungsverhinderungsmittel einen Keil (10b4) umfaßt, welcher von einem Armelement in die zylindrische Strebe (10b3) einsetzbar ist, um die Rotation der genannten Strebe zu verhindern.

3. Vorrichtung gemäß einem der vorhergehenden Ansprüche, gekennzeichnet dadurch, daß sie eine zweite Winde (5, 12) umfaßt, dessen Seil so angebracht ist, daß er an einem Ende mit dem Gegenstand verbunden ist und daß er den Gegenstand nach vorne zieht, wenn dieser auf dem Fahrgestell (1a, 7a) plaziert werden soll, wonach das Seil (1e, 7e1) der ersten Winde (1d, 7e) gelockert wird.

4. Vorrichtung gemäß einem der vorhergehenden Ansprüche, gekennzeichnet dadurch, daß die zweiten parallelen Armelemente (2b1, 2b2) des Hebels für einen Transportzustand nach unten gegen das vordere Ende des Anhängers gedreht werden können.

5. Vorrichtung gemäß einer der vorhergehenden Ansprüche, gekennzeichnet dadurch, daß die Länge der parallelen Armelemente (2a1, 2b1; 2a2, 2b2: 10a1, 10b2; 10a2, 10b2) des Hebelarms die Länge des Anhängers überschreitet und daß die Entfernung zwischen den parallelen Armelementen (2a, 2b1; 2a2, 2b2: 10a1, 10b1; 10a2, 10b2) der beiden Hebelarme die Breite des Anhängers überschreitet, so daß die Hebelarme beim Transportzustand keinen Laderaum einnehmen.

6. Vorrichtung gemäß einem der vorangegangenen Ansprüche, gekennzeichnet dadurch, daß die Rotationsachse (3, 11) hinter der Anhängerplattform plaziert und vertikal abgesenkt ist, so daß der obere Teil der Achse auf derselben Ebene liegt wie die Plattform.

7. Vorrichtung gemäß einem der vorangegangenen Ansprüche, gekennzeichnet dadurch, daß die Vorrichtung wenigstens ein Stützbein (1c, 7c) umfaßt, welches nach unten oder nach oben gedreht werden kann oder abnehmbar angebracht ist.

8. Vorrichtung gemäß einem der vorausgegangenen Ansprüche, gekennzeichnet dadurch, daß die Vorrichtung auf einem Bootsanhänger (7) plaziert wird.

9. Vorrichtung gemäß einem der vorausgegangenen Ansprüche, gekennzeichnet dadurch, daß die zweiten parallelen Armelemente (10b1, 10b2) teleskopisch ausstreckbar sind.

## Revendications

1. Dispositif pour une remorque (1, 7) comprenant un châssis (1a, 7a) supporté par des roues (1b, 7b), un dispositif d'accouplement (1f, 7f) à l'avant pour connecter la remorque (1, 7) à un véhicule de remorquage et situé également à l'extrémité avant de la remorque, un mât de treuillage (6) muni d'un treuil (1d, 7e), caractérisé en ce que le dispositif comprend un levier à deux bras, dont les bras forment l'un avec l'autre un angle et comprennent des éléments formant bras parallèles (2a1, 2b1 ; 2a2, 2b2 : 10a1, 10b1 ; 10a2, 10b2), qui sont pivotés selon un axe de rotation (3, 11), qui est orienté transversalement à l'arrière de la remorque, les premiers éléments formant bras parallèles (2a1, 2a2 : 10a1, 10a2), qui pointent principalement vers l'avant à partir de l'axe de rotation (3, 11), ont des longueurs qui dépassent ou tombent au-dessous des longueurs des seconds éléments formant bras parallèles (2b1, 2b2 : 10b1, 10b2) du levier, les extrémités des éléments formant bras parallèles (2a1, 2b1 ; 2a2, 2b2) sont reliées aux extrémités de l'axe de rotation (3, 11) et à leurs extrémités extérieures, ils sont unis par des traverses transversales (2a3, 2b3 : 10a3, 10b3), la distance entre les extrémités extérieures des premiers éléments formant bras parallèles (2a1, 2a2 : 10a1, 10a2) dépasse ou descend au-dessous de la distance entre les extrémités extérieures des seconds éléments formant bras parallèles (2b1, 2b2 : 10b1, 10b2) et limite la largeur des objets qui peuvent être chargés sur la remorque ou déchargés de celle-ci, l'angle entre les bras du levier à deux bras est déterminé par une tige (2ab, 10ab), qui est monté de façon démontable entre les bras, le câble (1e, 7e1) du treuil est disposé de façon à défiler du treuil à travers les traverses transversales (2a3, 2b3 : 10a3, 10b3) situées aux extrémités extérieures des éléments formant bras parallèles (2a1, 2b1 ; 2a2, 2b2 : 10a1, 10b1 ; 10a2, 10b2) des bras de levier et est pourvu à une extrémité d'un moyen de levage prévu pour l'objet, le dispositif comprend aussi un moyen anti-déplacement apte à empêcher tout déplacement relatif entre les éléments formant bras parallèles (2a1, 2b1 ; 2a2, 2b2 : 10a1, 10b1 ; 10a2, 10b2) des bras de levier et le câble (1e, 7e1) pendant des phases prédéterminées du chargement ou du déchargement de l'objet.

2. Dispositif selon la revendication 1, caractérisé en ce que la traverse transversale (2b3) des seconds éléments formant bras parallèles (2b1, 2b2) du levier est pourvue d'un bloc (4) à travers lequel le câble (1e) défile, qui verrouille le câble dans une direction et lui permet de défiler dans l'autre direction ou en ce que la traverse transversale (10b3) des seconds éléments formant bras parallèles (10b1, 10b2) du levier est cylindrique et est pivotée dans les extrémités extérieures des éléments formant bras (10b1, 10b2), en ce que le câble (7e1) est guidé au moins sur un tour autour de la traverse cylindrique (10b3) et en ce que ledit moyen anti-déplacement comprend une clavette (10b4) qui peut être insérée dans la traverse cylindrique (10b3) à partir de l'élément formant bras pour empêcher la rotation de ladite traverse.

3. Dispositif selon l'une quelconque des revendications précédentes, caractérisé en ce qu'il comprend un second treuil (5, 12), dont le câble est apte à être connecté à une extrémité de l'objet et qui est apte à tirer l'objet vers l'avant lorsqu'il doit être placé sur le châssis (1a, 7a), après quoi le câble (1e, 7e1) du premier treuil (1d, 7e) est détendu.

4. Dispositif selon l'une quelconque des revendications précédentes, caractérisé en ce que les seconds éléments formant bras parallèles (2b1, 2b2) du levier, pour un état de transport, peuvent être tournés vers le bas contre l'extrémité avant de la remorque.

5. Dispositif selon l'une quelconque des revendications précédentes, caractérisé en ce que la longueur des éléments formant bras parallèles (2a1, 2b1 ; 2a2, 2b2 : 10a1, 10b1 ; 10a2, 10b2) des bras de levier dépasse la longueur de la remorque et en ce que la distance entre les éléments formant bras parallèles (2a1, 2b1 ; 2a2, 2b2 : 10a1, 10b1 ; 10a2, 10b2) des deux bras de levier dépasse la largeur de la remorque de sorte que les bras de levier n'occupent aucun espace de chargement dans leur état de transport.

6. Dispositif selon l'une quelconque des revendications précédentes, caractérisé en ce que l'axe de rotation (3, 11) est placé derrière le plateau de la remorque et est abaissé verticalement de sorte que la partie supérieure de l'axe s'étend au même niveau que le plateau.

7. Dispositif selon l'une quelconque des revendications précédentes, caractérisé en ce que le dispositif comprend au moins un pied de support (1c, 7c), qui peut être tourné vers le bas ou tourné vers le haut ou qui est fixé de façon démontable.

8. Dispositif selon l'une quelconque des revendications précédentes, caractérisé en ce que le dispositif est placé sur une remorque de bateau (7).

9. Dispositif selon l'une quelconque des revendications précédentes, caractérisé en ce que les seconds éléments formant bras parallèles (10b1, 10b2) sont extensibles téléscopiquement.
